# EUROPEAN PATENT APPLICATION

(11) **EP 4 154 719 A1**
(43) Date of publication of application: **29.03.2023**
(21) Application number: 22190472.5
(22) Date of filing: 16.08.2022
(51) Int. Cl.: A21D 8/06, A21D 13/10, A21D 13/13, A21D 13/14, A21D 13/22, A21D 13/33, A21D 13/37, A23P 30/25

(54) **EDIBLE DOUGH WALLED CAKE PRODUCT THAT DOES NOT REQUIRE A COOKING PAN AND BAKING PAPER, AND PRODUCTION METHOD THEREOF**

(30) Priority: 28.09.2021 TR 202115099
(71) Applicant: Eti Gida Sanayi Ve Ticaret Anonim Sirketi, Odunpazari/Eskisehir (TR)
(72) Inventor: KARANF L, ABDULLAH, Eski ehir (TR); GÖRGÜLÜ, AHMET, Eski ehir (TR)
(74) Representative: Yamankaradeniz, Kemal

(57) **Abstract**

Method of production of an edible dough walled cake product subjected to a co extrusion and deposit method, baked without pans or baking papers, so that said product doesn't require unnecessary usage of pans or mould release agents, therefore saving energy during the heating and cooling process of said product or water for cleaning the mould utensils such as pans.

## Description

### Technical Field of the Invention

The present invention relates to an edible dough walled cake product and its production method, which is cooked without any material such as pan, paper or separator.

### State of the Art

Cake products are mostly produced with or without baking paper in cake pans whose product contact surfaces are coated with anti-adhesive materials such as silicone and Teflon in the state of the art. Some of the cake types baked in the form of a layer (layer cake) can be made with a certain thickness, with high egg content and low fat (sponge cake, cake base) so as to be suitable for post-processing operations (cream/jam filling, folding, cutting etc.).

The cake pans can be produced by using coatings known to have negative effects on health, such as Teflon or silicone, to prevent sticking to the baking surface, and by applying mold release oil components to the surface in the state of the art. Special baking papers are used in some products so as to prevent these problems. In any case, it is known that pan and paper negatively affect the product quality in cake production. Furthermore, cooking is achieved by heating metal pans having high mass with a mass 3-10 times more than baked cake mass, in one tray unnecessarily. This causes unnecessary use of heat energy and negative environmental effects. In addition, unnecessary pan release agents, raw material losses with the washing of pans and product quality weaknesses occur. Currently, in addition to the use of very special and sensitive technologies, it is often necessary to use oil and wax-based mold release agents sprayed into the mold to remove the cake products from the pans without leaving any residue and without damaging. In addition, industrial and mass cake production investments and costs with known methods are at very high levels and the equipment is too heavy.

A patent search was also conducted within the scope of the invention, but no patent application was found for the edible dough walled cake product that does not require a cooking pan and baking paper.

Patent application numbered US7303115 relates to a cake carrier for organizing and protecting cakes during storage and transportation. Said carrier comprises a container consisting of a sheet of material and carrying a circular placing tray, having wings folded to form an upwardly opening cavity.

In the patent application numbered US4002773, the cooking and packaging system is described. Flat-folded, double-layered cardboard trays with spaced openings in the top layer are put upright and placed on the conveyor. A predetermined amount of batter is injected into each container by placing a paper baking container with its bottom abutting the bottom layer of the tray in each opening.

The patent application numbered US1831147 is related to the cupcake pan. The disclosed invention consists of a top plate with a plurality of cups inside, a core plate open on top of said top plate and on the sides, and a cake tray with a spherical bottom extending into said bowl.

In the patent application numbered US6869059, an oven baking muffin mold and a pan for baking batter so as to provide a baked product such as cake or muffin is disclosed. The pan includes a raised perimeter wall that acts as a shield or baffle to ensure consistent airflow over the batter during baking.

### Technical problems aimed to be solved with the Invention

Unnecessary pan using, energy usage for pans, mold release agents, pan washing, additional heating and cooling of pans are eliminated and product quality and cost are significantly improved with the present invention. In addition, the water, energy and pan coating renewal costs used in washing the pans are eliminated, and negative effects on the environment are eliminated.

### Description of the Invention

Pan, baking paper, mold release, pan washing, unnecessary water and energy use, and negative environmental effects of cake products are completely eliminated with the help of the coextruded dough deposit method developed with the present invention. The ratio of the weight of the pan used in the cake production to the weight of the cake batter baked varies between 3 and 10 (1 kg of batter versus 3-10 kgs of pan). In other words, the pan weighing 3 to 10 times more than the cooked dough circulates in the system. This causes the pans to be heated and cooled repeatedly in each cycle, and excessive fuel use to heat the pans, thus resulting in negative environmental effects. The method of cooking in a pan is completely eliminated with the present invention.

### Description of the Figures

**Figure 1****:** Coextruded dough production method
**Figure 2****:** Portioning of cakes whose outer layer is made of crust dough
**Figure 3****:** Application alternatives of the outer dough layer
**Figure 4****:** Portioning of cake dough produced as roving by cutting them on the belt
**Figure 5****:** Flow chart of cake production without pan and paper
**Figure 6****:** Vertical coextrusion and cake product samples
**Figure 7****:** Cake samples produced by guillotine or rotary cutting from the roving flowing horizontally on the conveyor

### Description of the References

**(1)** Outer crust (wall) dough
**(2 and 3)** Poured cake batter
**(4)** Spirals and pumps
**(5)** Nozzles suitable for product geometry
**(6)** Product portioning knife
**(7)** Portioned product
**(8)** Hopper
**(9)** Formation of cake batter with open top and bottom
**(10)** Cake batter that can only be left open at the top and covered at the bottom
**(11)** Formation of cake batter in a way that the top and bottom can be completely closed
**(12)** Conveyor
**(13)** A rotary or guillotine cutter
**(14)** Solution spraying
**(15)** Particles
**(16)** Particle Sprinkler
**(17)** Top decoration
**(18)** Production of cake batter by known cake batter preparation methods
**(19)** Feeding the prepared batters into multi-component coextruded hoppers
**(20)** Portioning of batter layers removed as rovings in different ways with special cutting and shaping knives
**(21)** Liquid spraying
**(22)** A particle sprinkler
**(23)** Baking
**(24)** Different filling injections
**(25)** Cooling of products
**(26)** Packaging of products

### Detailed Description of the Invention:

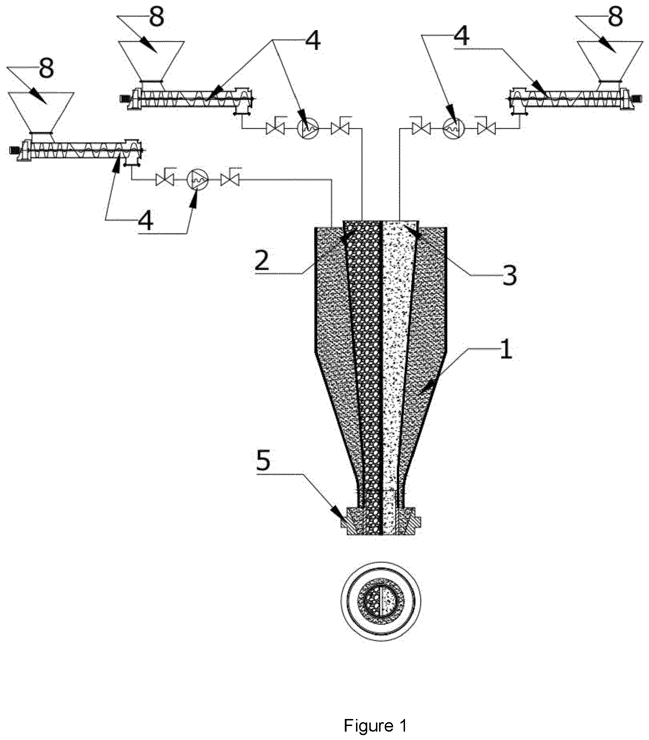

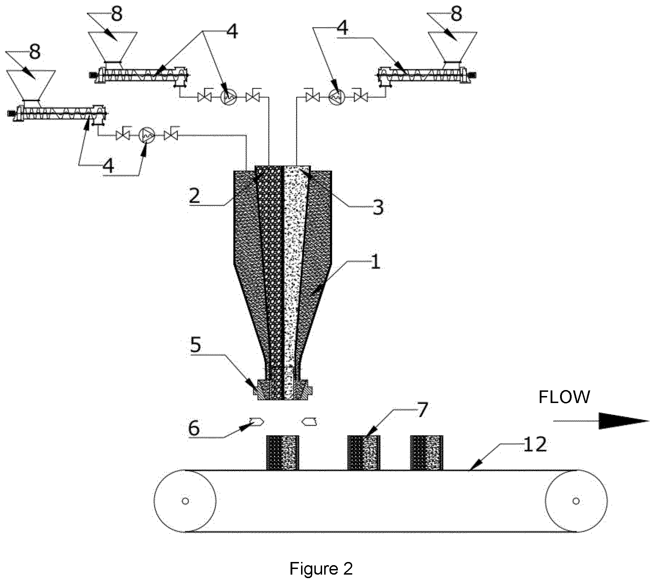

Since cake batters are fluid and soft and spread out with the effect of heat, they cannot keep their shape on flat cooking surfaces. A dough extruder with 3 tubes is used, in which 3 different batters can be placed and which applies pressure to the batters so as to solve this problem (Figure 1). There are tubes (8) where two different doughs, such as cake batters (2 and 3), with an outer crust (wall) dough (1) that forms the outer layer, which is harder and can maintain its shape, can be used when desired. The cake batters (2 and 3) which is poured out of the outer crust dough (1) that is continuously extruded as a thin-wall, is pumped to the coextruder nozzles under pressure by means of the spirals and pumps (4), which are located under the hopper (8), whose speed and flow rate can be adjusted (Figure 1). The batter, which is extruded in the form of a tube at the exit of the coextruder, is baked by leaving the bottom and top open or the bottom side covered by rubbing, leaving it on the tunnel oven band or the pan, when desired (Figure 2).

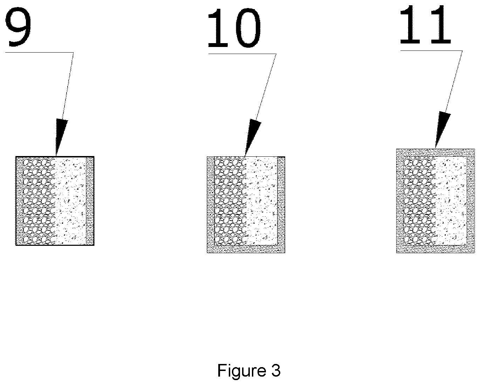

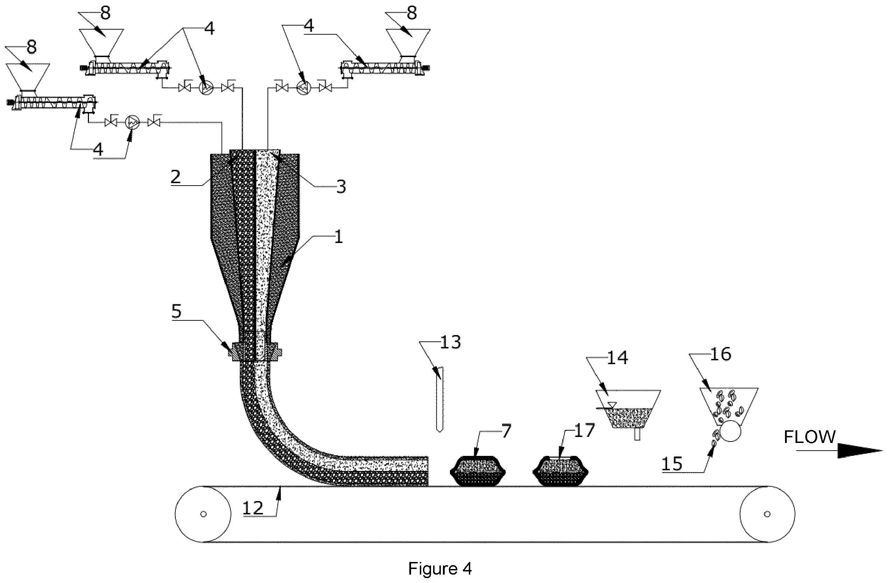

Cake product subjected to the invention, as in the schematic illustration given in Figure 1 is made by forming the components (1,2,3) (extrusion) that are continuously pulled through the spiral and pumps (4) that apply pressure for extrusion with the help of a harder outer crust dough (1) in the form of a tube, and also with the help of nozzles suitable for the product geometry (5). Said system is a system in which the continuously flowing cake batter (2 and 3) is covered by plastering with appropriate apparatus depending on the size of the product, and consists of portioning knives. The flow chart and steps of the system are given in Figure 2. Here, it is seen as the outer crust dough (1) that flows as the outer layer, the poured cake batters (2 and 3), the product portioning knife (6), the portioned product (7), and the product transport conveyor (12). The thickness of the outer layer varies between 0.5 mm and 5 mm depending on the product geometry, size and rheological properties of the doughs. The dough used as the outer layer (crust) can be applied in different ways by horizontal cutting method, as can be seen in Figure 3. The top and bottom of the cake dough can be left open(9), only the top part can be left open and the bottom part can be closed(10), the bottom and top of the cake dough can be fully covered (11). Instead of vertical cutting in Figure 2, products can be produced by vertical cutting method by using the guillotine or rotary knife given in Figure 4. Here, the products, rovings dough tubes are lowered onto a conveyor (12) by being produced continuously, that outer layer of rovings dough tubes is made of a hard outer crust dough (1) again with the coextrusion system. Then, the products are cut from the roving and portioned on a transport conveyor by using a rotary or guillotine type cutter (13). If desired, after portioning of the products, particles (15) and additional solution spraying (14) can be poured on them by means of a particle sprinkler (16), before they are baked in both methods in Figure 2 and Figure 4. If desired, additional fillings can be injected into the cake dough after baking. As shown in Figure 4, top decoration (17) can be applied on the portioned products (7) so as to facilitate the cake batter to rise during baking and to overflow from the upper surface. The outer dough layer, which traps the cake dough inside, is also edible, cake products can be produced continuously and without any loss of raw materials with the present invention. In addition, structuring of the equipment such as tunnel oven, transport conveyors, etc. designed by considering the total weight of pan and cake batter in the state of art, are also simplified, 20-60% less technical materials and 20-40% lower power electric motors can be used, the carbon footprint is reduced up to three times. The dough which is used as the outer layer (crust) when desired, can be designed in different colors (with cocoa, etc.) or by using the main inputs of cake dough, and outer layer doughs can also be designed by removing the liquidizing inputs such as egg, oil etc. used in the cake dough. Example of recipe design and process parameters for outer layer dough and cake dough are given in Table 1.

**Table 1. Sample cake doughs and outer layer dough input ratios**

| **Inputs** | **Plain Cake** | | | **Cocoa Cake** | | | **Outer Layer Dough** | | |
|---|---|---|---|---|---|---|---|---|---|
| | **Dough (%)** | **Dry Matter (%)** | **Final Product (%)** | **Dough (%)** | **Dry Matter (%)** | **Final Product (%)** | **Dough (%)** | **Dry Matter (%)** | **Final Product (%)** |
| Wheat Flour | 25,9 | 22,2 | 26,3 | 23,3 | 20,0 | 23,8 | 52,4 | 45,1 | 57,2 |
| Whole Egg | 20,0 | 6,0 | 7,1 | 18,0 | 5,4 | 6,44 | - | - | - |
| Powdered Sugar | 21,0 | 21,0 | 24,9 | 20,0 | 20,0 | 23,8 | 22,0 | 22,0 | 27,9 |
| Water | 8,0 | - | - | 10,0 | 0 | 0 | 12,0 | 0 | 0 |
| Vegetable Oil | 17,0 | 17,0 | 20,1 | 16,0 | 16,0 | 19,1 | 8,0 | 8,0 | 10,2 |
| Cocoa Powder | - | - | - | 4,0 | 3,8 | 4,6 | 0 | 0 | 0 |
| Emulsifier | 1,40 | 1,40 | 1,66 | 1,60 | 1,60 | 1,91 | - | - | - |
| Lecithin | 0,80 | 0,80 | 0,95 | 1,0 | 1,0 | 1,19 | 0,4 | 0,4 | 0,51 |
| Sodium Bicarbona te | 0,80 | 0,40 | 0,47 | 1,0 | 0,50 | 0,60 | - | - | - |
| Salt | 0,3 | 0,3 | 0,36 | 0,3 | 0,3 | 0,36 | 0,2 | 0,2 | 0,25 |
| SAPP 20 | 0,80 | 0,51 | 0,61 | 0,8 | 0,51 | 0,61 | - | - | - |
| Invert Sugar | 5,0 | 3,0 | 3,55 | 4,0 | 3,0 | 3,58 | 5,0 | 0 | 0 |
| Aroma | 0,04 | 0,01 | 0,01 | 0,04 | 0,01 | 0,01 | - | - | - |
| Total (%) | 100 | 72,7 | 86,0 | 100 | 72,2 | 86,0 | 100 | 75,7 | 96,0 |
| Moisture (%) | 27,3 | - | 14,0 | 27,8 | - | 14,0 | 24,3 | - | 4,0 |

In order to produce cake products without a pan and a paper in a way that is the same as the product quality in the state of the art, critical product parameters before and after baking are given in Table 2 as an example.

**Table 2. Critical parameters before and after baking**

| **Before Baking** | | **White Cake Dough** | **Cocoa Cake Dough** | **Outer Layer Dough** |
|---|---|---|---|---|
| Temperature | °C | 25-28 | 25-28 | 30-35 |
| Density | gr/cm³ | 0,85-0,95 | 0,85-0,95 | 0,65-1,30 |
| Viscosity (25 °c) | cP | 700.000-82.000 | 70.000- 82.000 | - |

| **After Baking** | | White Cake Final Product | Cocoa Cake Final Product | Outer Layer Final Product |
|---|---|---|---|---|
| Density | gr/cm³ | 0,45-0,55 | 0,45-0,55 | 0,45-0,65 |
| Water Activity | % | 0,73-0,75 | 0,70-0,72 | 0,20-0,30 |
| Moisture | % | 14-17 | 14-17 | 3-4,5 |

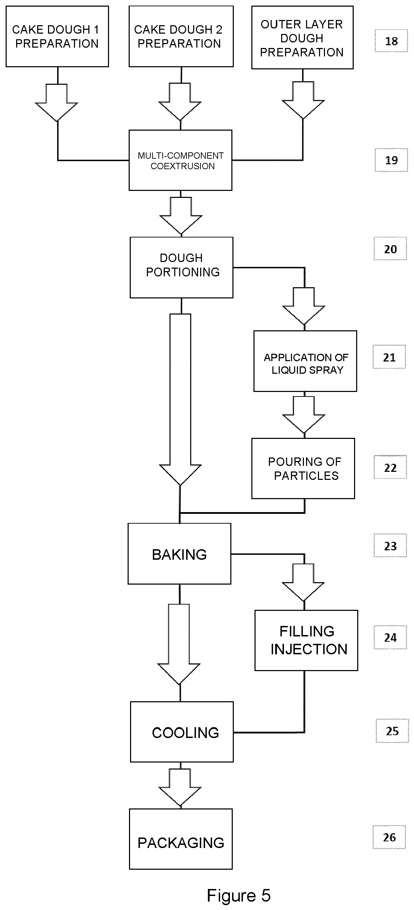

Flow chart of cake production without pan and paper is given in Figure 5. Cake batters are produced by cake batter preparation methods such as planetary mixer, premix+aerator, gridlap mixer (with horizontal hole anchor) etc. (18). If desired, two different batters can be added and particles (fruit, chocolate drops, etc.) can be added to the batter. The outer dough layer is also prepared with mixers with horizontal or vertical mixers (anchors).

Cake and outer dough sample recipes are in Table 1; critical parameters before and after baking are given in Table 2. Prepared batters are fed into multi-component coextruder tubes (8)(19). Flow is provided in tubular form from the nozzle, by applying pressure to the batters by the pumping mechanisms in the coextruder, The amount of crust and inner dough can be adjusted by adjusting the nozzle design and dough flow rates. The dough layers, which are taken out as rovings are portioned in different ways with special cutting and shaping knives (20). Guillotine or rotary cutters can also be used on the belt for portioning. After portioning liquid food component can be sprayed (21) for particle adhesion, surface appearance or color-flavouring before baking, depending on the type of product. In addition, fruit, nuts, drop chocolate, etc., can be applied to the product surfaces before baking by means of a particle sprinkler (22). In order to preserve the shape of the outer dough (Table 1), which is specially designed with low-fat, high-sugar and high-humidity, so that it does not spread and deform during baking, during the cooking phase, high convection heat transfer is applied through the turbo oven module in the first part of the oven and the outer surface of the dough quickly loses moisture and forms a crust with the high air velocity (2-4 m/sec) and high air temperature acting on the outer surface of the dough and the cake dough inside can be kept without scattering. First, the outer layer is hardened with high convection heat transfer and the cake is baked (in high convection and radiation) by applying baking temperature profiles in the next zones by applying a special cooking profile at the mentioned high temperature (between 225°C and 235°C). A crust is formed outside the outer dough in the first part of the oven, and a cake baking temperature profile is applied in the following zones. Baking parameters are given in Table 3.

**Table 3. Tunnel Oven baking conditions**

| **Baking Parameters** | | **1^{st} Zone** | **2^{nd} Zone** | **3^{rd} Zone** | **4^{th} Zone** |
|---|---|---|---|---|---|
| **Baking Time** | min. | 3-4,5 | 4-5,5 | 5-6 | 5,5-7 |
| **Heat transfer type** | | Convection | Radiation + Convection + Conduction | | |
| **Temperature** | °C | 225-235 | 190-195 | 180-190 | 200-225 |
| **Internal Pressure of the Oven** | Pascal | .-500; -.1000 | 0 | 0; -500 | -1000; -2000 |
| **Internal Moisture of the Oven** | % | 60-70 | 80-95 | 80-95 | 70-80 |

After baking (23), different filling injections (24) to the products can also be made by centering with known methods. After cooling (25), the products are packaged (26) and made ready for consumption.

After packaging, a balance occurs within a few days with moisture and oil transitions between cake batters, fillings and crust dough. As a consequence of this balance, crust dough and cake dough structures approach each other, and it is not easy to distinguish that they are made from different batters.

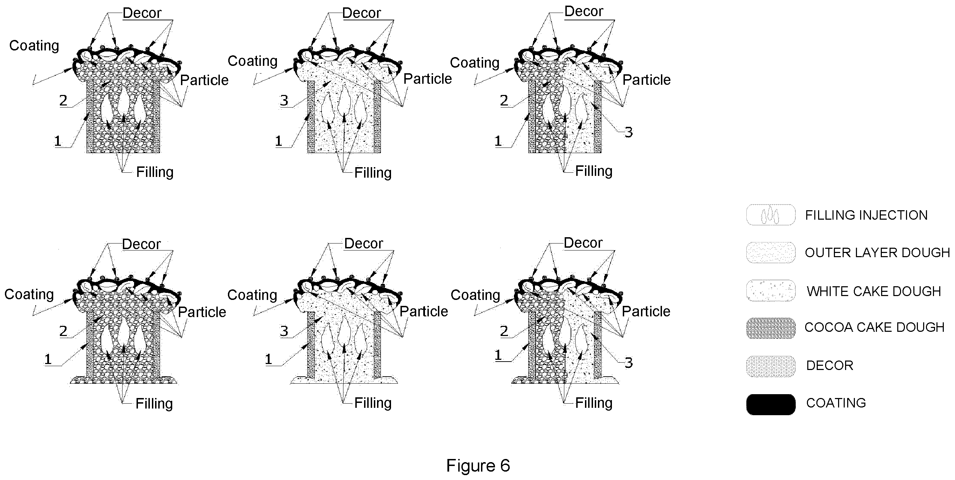

In Figure 6, examples of cakes in different forms and compositions that can be produced by cutting perpendicular (horizontal) to the flow axis with the vertical coextrusion method given in Figure 2 are given. If desired, liquid spray and particles can be poured into all samples before baking.

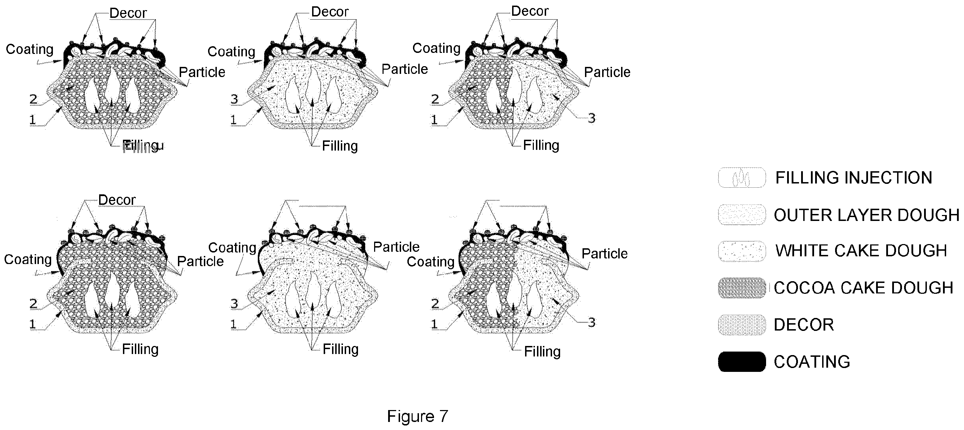

In Figure 7, examples of cakes in different forms and compositions which can be produced as roving by horizontal coextrusion method, which is given in Figure 4, by being cut on the conveyor with a guillotine or rotary cutter, are given. If desired, liquid spray and particles can be poured into all samples before baking.

Pan, baking paper, mold release, pan washing, unnecessary water and energy use, and negative environmental effects of cake products are completely eliminated with the help of the coextruded dough deposit method developed with the present invention. The ratio of the weight of the pan used in the cake production to the weight of the cake dough baked varies between 3 and 5 (1 kg of dough versus 3-5 kg of pan). In other words, the pan weighing 3 to 5 times more than the cooked dough circulates in the system. The method of baking in a pan has been completely eliminated with the present invention.

Instead of paper, an edible outer dough layer of 0.5 to 5 mm, preferably 1 mm, is used in the product subjected to the invention, thus, it is aimed to hold the cake dough and act as a container. Thus, a product that has the ability to use different (two or three) dough layers has been designed.

## Claims

1. A dough-walled cake product, which is baked without any material such as pan, paper, **characterized in that;** it comprises an edible crust layer (1) having 0.5 mm to 5 mm width in order to hold the cake batter and serve as a container.

2. Cake product according to claim 1, **characterized in that;** it is produced without pan and with edible outer crust dough (1).

3. Cake product according to claim 1, **characterized in that;** it is produced without pan by using coextruded dough deposit method.

4. Cake product according to claim 1, **characterized in that;** first the outer layer is hardened with high convection heat transfer and the cake is baked (in high convection and radiation) by applying baking temperature profiles in the next zones, by applying a special cooking profile at between 225°C and 235°C.

5. Cake product according to claim 1, **characterized in that;** the cake batters (2 and 3) which is poured out of the outer crust dough (1) that is continuously extruded as a thin-walled pipe is pumped to the coextruder nozzles under pressure by means of the spirals and pumps (4), which are located under the hopper (8), whose speed and flow rate can be adjusted.

6. Cake product according to claim 1, **characterized in that;** the components (1, 2, 3) (extrusion) that are continuously pulled through the spiral and pumps (4) that apply pressure for extrusion are shaped with the help of a harder outer crust dough (1) in the form of a tube, and also with the help of nozzles (5) suitable for the product geometry and is cooked by placing the same on a tunnel oven steel band or pan.

7. Cake product according to claim 1, **characterized in that;** if desired, after portioning of the products, particles (15) and additional solution spraying (14) can be poured on them by means of a particle sprinkler (16), before they are baked.

8. Cake product according to claim 1, **characterized in that;** top decoration (17) can be applied on the portioned products (7) so as to facilitate the cake dough to rise during baking and to overflow from the upper surface.

9. Cake product according to claim 1, **characterized in that;** cake dough can be formed in a way that the bottom and top are open (9) or only the top part can be left open and the bottom part can be covered (10) or the bottom and top can be completely covered (11).

10. Cake product according to claim 1, **characterized in that;** it can be produced in different forms and compositions by cutting perpendicular (horizontal) to the flow axis with the vertical coextrusion method.

11. Cake product according to claim 1, **characterized in that;** it is possible to use different (two or three) dough layers.
